# EUROPÄISCHE PATENTSCHRIFT

(11) **EP 4 037 812 B1**
(45) Veröffentlichungstag und Bekanntmachung des Hinweises auf die Patenterteilung: **08.11.2023**
(21) Anmeldenummer: 20774940.9
(22) Anmeldetag: 16.09.2020
(51) Int. Cl.: B01D 63/08, H01M 8/04007, H01M 8/04119

(54) **BEFEUCHTER, BRENNSTOFFZELLENVORRICHTUNG SOWIE KRAFTFAHRZEUG MIT EINER BRENNSTOFFZELLENVORRICHTUNG**
HUMIDIFIER, FUEL CELL DEVICE AND MOTOR VEHICLE WITH A FUEL CELL DEVICE
HUMIDIFICATEUR, DISPOSITIF DE PILES À COMBUSTIBLE ET VÉHICULE AUTOMOBILE POURVU D'UN DISPOSITIF DE PILES À COMBUSTIBLE

(30) Priorität: 30.09.2019 DE 102019126309
(43) Veröffentlichungstag der Anmeldung: 10.08.2022
(73) Patentinhaber: Audi AG, 85057 Ingolstadt (DE)
(72) Erfinder: STAECK, Rune, 38518 Gifhorn (DE); WESTPHAL, Tore, 38527 Meine (DE)
(74) Vertreter: Hentrich Patent- & Rechtsanwaltspartnerschaft mbB
(86) Internationale Anmeldenummer: PCT/EP2020/075821
(87) Internationale Veröffentlichungsnummer: WO 2021/063679

(56) Entgegenhaltungen:
- WO-A1-2019/170207
- DE-U1-202012 004 927
- DE-U1-202016 100 670
- US-A1- 2015 180 059

## Beschreibung

Die Erfindung betrifft einen Befeuchter mit mindestens einem Befeuchtermodul, gebildet durch zwei Flussfeldplatten mit darin ausgebildeten Flussfeldern, die jeweils durch Flussfeldstege getrennte Strömungskanäle aufweisen und durch mindestens eine Membran getrennt sind, mit in den Flussfeldplatten ausgebildeten Headerkanälen zur Speisung und Entleerung der Flussfelder, wobei die Headerkanäle sich über die gesamte Breite der Flussfelder erstrecken, und mindestens der Headerkanal für das eine Gas von Tunnel für das andere Gas durchquert wird. Die Erfindung betriff weiterhin eine Brennstoffzellenvorrichtung sowie ein Kraftfahrzeug.

Befeuchter im Allgemeinen werden eingesetzt, um bei zwei gasförmigen Medien mit einem unterschiedlichen Feuchtegehalt eine Übertragung der Feuchte auf das trockenere Medium bewirken zu können. Derartige Gas/GasBefeuchter finden insbesondere Anwendung in Brennstoffzellenvorrichtungen, bei denen im Kathodenkreislauf zur Versorgung der Kathodenräume des Brennstoffzellenstapels Luft mit dem darin enthaltenen Sauerstoff verdichtet wird, so dass relativ warme und trockene komprimierte Luft vorliegt, deren Feuchte für die Verwendung in den Brennstoffzellenstapeln für die Membranelektrodeneinheit nicht ausreicht. Die durch den Verdichter bereitgestellte trockene Luft für den Brennstoffzellenstapel wird befeuchtet, indem sie an einer für Wasserdampf durchlässigen Membran vorbeigeführt wird, deren andere Seite mit der feuchten Abluft aus dem Brennstoffzellenstapel bestrichen wird. Für die Konditionierung der den Kathodenräumen des Brennstoffzellenstapels zuzuführenden Luft ist auch deren Temperierung erforderlich, wozu in der Regel nach dem Verdichter positionierte Ladeluftkühler eingesetzt werden. Der Befeuchter und der Ladeluftkühler sind große Komponenten, die zu einer starken Vergrößerung des erforderlichen Bauraums für eine Brennstoffzellenvorrichtung beitragen und die Effizienz der Brennstoffzellenvorrichtung einschränken, weil hohe thermische Verluste vorliegen.

Zu beachten ist weiterhin, dass für eine effiziente Befeuchtung eine möglichst gleichmäßige Verteilung sowohl des trockenen Gases als auch des Gases mit der höheren Feuchtigkeit wünschenswert ist, da so auch eine gleichmäßige Befeuchtung gefördert wird.

In den Druckschriften US 9,735,438 B2, DE 10 2016 224 478 A1 und DE 20 2014 006 480 U1 sind Befeuchter beschrieben, die in Brennstoffzellenvorrichtungen Verwendung finden.

Aufgabe der vorliegenden Erfindung ist es daher, einen Befeuchter mit verbesserter Effizienz sowie eine verbesserte Brennstoffzellenvorrichtung und ein verbessertes Kraftfahrzeug bereit zu stellen.

Diese Aufgabe wird durch einen Befeuchter mit den Merkmalen des Anspruches 1, durch eine Brennstoffzellenvorrichtung mit den Merkmalen des Anspruches 8 und durch ein Kraftfahrzeug mit den Merkmalen des Anspruchs 9 gelöst. Vorteilhafte Ausgestaltungen mit zweckmäßigen Weiterbildungen der Erfindung sind in den abhängigen Ansprüchen angegeben.

Der Befeuchter zeichnet sich dadurch aus, dass die Flussfelder mit durch Flussfeldstege getrennten Strömungskanälen versehen sind, die sich über die gesamte Breite des Flussfeldes erstrecken. Zur gleichmäßigen Versorgung dieser Strömungskanäle weisen die Headerkanäle eine vergleichbare, insbesondere die gleiche Breite auf, so dass über die gesamte Breite des Flussfeldes aus dem Headerkanal das Gas in die Strömungskanäle strömen kann, mit dem im wesentlichen gleichen Volumenstrom und ohne nachteilige Druckunterschiede. Es findet damit eine gleichmäßige Befeuchtung statt, die ermöglicht ist durch die Leitung des Gases durch die Tunnel als Teil der Strömungskanäle, um den zu dem einen Headerkanal benachbarten anderen Headerkanal zu durchqueren.

Die Effizienz des Befeuchters wird dadurch gesteigert, so dass dieser kleiner ausfallen kann, also der Bauraumbedarf sinkt und weniger Materialaufwand erforderlich ist, was auch Kostenvorteile bei der Fertigung beziehungsweise Montage bietet.

Eine effiziente Befeuchtung wird weiterhin gefördert, wenn die Anschlüsse für die Headerkanäle so gewählt sind, dass ein Gegenstrombetrieb erfolgt.

Zweckmäßig ist weiterhin für einen einfachen symmetrischen Aufbau, dass der Headerkanal für das andere Gas von Tunnel für das eine Gas durchquert wird, also beide Gase jeweils auf der Frischgasseite oder der Abgasseite durch entsprechende Tunnel geführt sind. Dazu ist die Gestaltung so getroffen, dass die Tunnel für das eine Gas oder das andere Gas in der Ebene der Flussfeldplatte um eine Breite der Flussfeldstege versetzt zu den zugeordneten Strömungskanälen angeordnet sind.

Der Befeuchter lässt sich hinsichtlich seiner Leistungsfähigkeit in einfacher Weise skalieren, indem das Befeuchtermodul mehrfach vorgesehen ist und die Mehrzahl der Befeuchtermodule durch ein generatives Fertigungsverfahren dichtungsfrei zu einem monolithischen Block zusammengefasst ist. Dies bietet durch die generative Fertigung auch den Vorteil, dass die komplexe Formgebung mit den die Headerkanäle durchquerenden Tunneln ohne Kostennachteile geschaffen werden kann.

Dabei bietet es sich an, dass das Befeuchtermodul durch die eines der Flussfelder aufweisende erste Flussfeldplatte mit einer darin ausgebildeten Tasche gebildet ist, in die die Membran eingelegt ist, die durch eine zweite Flussfeldplatte abgedeckt ist. Dabei wird ein Verfahren genutzt mit einem generativen Fertigungsschritt, um mittels eines 3D-Druckers eine erste Flussfeldplatte mit der darin ausgebildeten Tasche zu drucken, wobei nach dessen Fertigstellung der 3D-Drucker pausieren kann, um die Membran auf der gedruckten ersten Flussfeldplatte in der Tasche zu platzieren, um sodann erneut den 3D-Drucker zu nutzen, um die zweite Flussfeldplatte zu fertigen. Durch diese Art der Fertigung können sämtliche Dichtungen entfallen, die bei bisher bekannten Befeuchtern benötigt werden. Außerdem sind das erste Befeuchtermodul und das zweite Befeuchtermodul bereits miteinander verbunden, so dass ebenfalls keine weitergehende Montage erforderlich ist, und ein sonst benötigtes Spannsystem entfallen kann. Zu beachten ist weiterhin, dass so die Befeuchtermodule als Flussfeldrahmen mit zugewiesenen Flussfeldern in einfacher Weise gestaltet werden können, in denen die Strömungskanäle durch die Flussfeldstege getrennt sind. Die Kontur und/oder der Verlauf der Strömungskanäle, der diese trennenden Flussfeldstege, der Tunnel und/oder die Strömungskanäle speisende Zuleitungen ist aufgrund ihrer Lage und Funktion bestimmt mit weitgehend freier Formwahl. Aufgrund der Art des eingesetzten Fertigungsverfahren können problemlos auch unterschiedlichste Formen und Verläufe der Flussfeldstege und damit der Strömungskanäle oder der Zuleitungen und Ableitungen realisiert werden
Vorgesehen ist weiterhin, dass das Befeuchtermodul außenseitig einen Randbereich aufweist, der aus einem wärmeisolierenden Material gebildet ist. So ist eine Temperierung erleichtert, wenn die Flussfeldstege aus einem wärmeleitfähigen Material als Hohlstege gebildet und in einen Kühlmittelkreislauf eingebunden sind. Damit ergibt sich die weitere Möglichkeit des Wärmeübertrages.

Es liegt damit also ein Befeuchter vor, bei dem Headerkanäle zur Speisung und Entleerung der Flussfelder sich über die gesamte Flussfeldbreite erstrecken, wobei die Anschlüsse für die Headerkanäle so gewählt sind, dass ein Gegenstrombetrieb erfolgt, und dass der Headerkanal für das eine Gas von Tunnel für das andere Gas durchquert wird. Die bei konventioneller Herstellung gegebenen Nachteile des Gegenstrombetriebes aufgrund der aufwändigen Verteilerstruktur sind durch das gewählte Fertigungsverfahren vermieden. Es liegt bei dem Befeuchter eine bessere Strömungsverteilung innerhalb der einzelnen Flussfelder vor mit einem geringeren Druckverlust. Es ergibt sich ein optimierter Feuchteübertrag, der zu einem kleineren Befeuchter mit einem geringeren Bauraumbedarf führt.

Der so geschaffene Befeuchter mit einer Mehrzahl jeweils zwischen zwei Befeuchtermodulen angeordneten Membranen ist frei von Dichtungen und frei von einem Spannsystem, wobei auch die Bauform in weiten Grenzen frei gewählt werden kann, also eine bessere Anpassung an die Einbaubedingungen gegeben ist, wenn dieser Befeuchter beispielsweise als Teil einer Brennstoffzellenvorrichtung in einem Kraftfahrzeug verwendet wird.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer Brennstoffzellenvorrichtung mit einem darin genutzten Befeuchter,
- Fig. 2: eine schematische perspektivische Ansicht eines Befeuchters,
- Fig. 3: eine perspektivische Darstellung eines Flussfeldes mit sich über dessen Breite erstreckenden Headerkanälen, und
- Fig. 4: das Detail IV aus Figur 3.

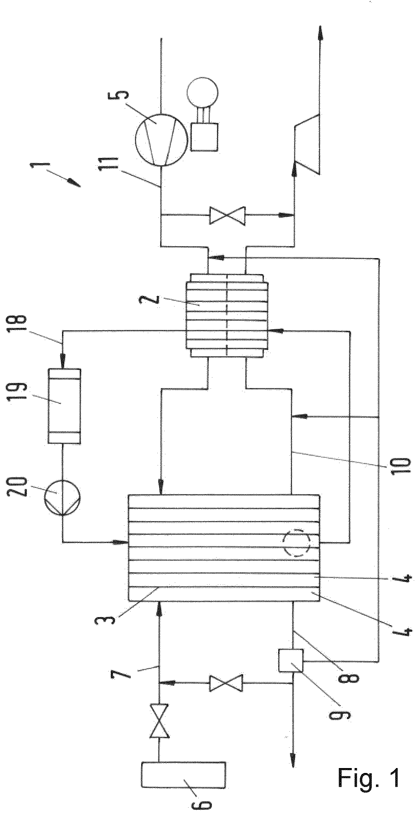

In der Figur 1 ist schematisch eine Brennstoffzellenvorrichtung 1 gezeigt, wobei diese einen Befeuchter 2 zur Feuchteregulierung einer Mehrzahl von in einem Brennstoffzellenstapel 3 zusammengefasster Brennstoffzellen 4 umfasst.

Jede der Brennstoffzellen 4 umfasst eine Anode, eine Kathode sowie eine die Anode von der Kathode trennende, protonenleitfähige Membran. Die Membran ist aus einem lonomer, vorzugsweise einem sulfonierten Polytetrafluorethylen-Polymer (PTFE) oder einem Polymer der perfluorierten Sulfonsäure (PFSA) gebildet. Alternativ kann die Membran auch als eine sulfonierte Hydrocarbon-Membran gebildet sein.

Den Anoden und/oder den Kathoden kann zusätzlich ein Katalysator beigemischt sein, wobei die Membranen vorzugsweise auf ihrer ersten Seite und/oder auf ihrer zweiten Seite mit einer Katalysatorschicht aus einem Edelmetall oder einem Gemisch umfassend Edelmetalle wie Platin, Palladium, Ruthenium oder dergleichen beschichtet sind, die als Reaktionsbeschleuniger bei der Reaktion der jeweiligen Brennstoffzelle 4 dienen.

Über einen Anodenraum kann der Anode Brennstoff (zum Beispiel Wasserstoff) zugeführt werden. In einer Polymerelektrolytmembranbrennstoffzelle (PEM-Brennstoffzelle) werden an der Anode Brennstoff oder Brennstoffmoleküle in Protonen und Elektronen aufgespaltet. Die PEM lässt die Protonen hindurch, ist aber undurchlässig für die Elektronen. An der Anode erfolgt beispielsweise die Reaktion: 2H₂ → 4H⁺ + 4e⁻ (Oxidation/Elektronenabgabe). Während die Protonen durch die PEM zur Kathode hindurchtreten, werden die Elektronen über einen externen Stromkreis an die Kathode oder an einen Energiespeicher geleitet.

Über einen Kathodenraum kann der Kathode das Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻→ 2H₂O (Reduktion/Elektronenaufnahme).

Da in dem Brennstoffzellenstapel 3 mehrere Brennstoffzellen 4 zusammengefasst sind, muss eine ausreichend große Menge an Kathodengas zur Verfügung gestellt werden, so dass durch einen Verdichter 5 ein großer Kathodengasmassenstrom oder Frischgasstrom bereitgestellt wird, wobei infolge der Komprimierung des Kathodengases sich dessen Temperatur stark erhöht. Die Konditionierung des Kathodengases oder des Frischluftgasstroms, also dessen Einstellung hinsichtlich der im Brennstoffzellenstapel 3 gewünschten Temperatur und Feuchte, erfolgt in einem dem Verdichter 5 nachgelagerten nicht näher gezeigten Ladeluftkühler sowie in dem Befeuchter 2, der eine Feuchtesättigung der Membranen der Brennstoffzellen 4 zur Steigerung von deren Effizienz bewirkt, da dies den Protonentransport begünstigt.

Anodenseitig ist der Brennstoffzellenstapel 3 mit einer Anodenzufuhrleitung fluidmechanisch verbunden, so dass in dem schematisch dargestellten Brennstoffspeicher 6 enthaltener Brennstoff dem Brennstoffzellenstapel 3 zugeführt werden kann. Ein Ventil oder auch eine Saugstrahlpumpe können dabei geeignet sein, um den gewünschten Partialdruck an frischem Brennstoff innerhalb eines Anodenkreislaufes 7 zu realisieren, der durch die Anodenrezirkulationsleitung 8 zustande kommt. Mit einer solchen Anodenrezirkulationsleitung 8 kann der im Brennstoffzellenstapel 3 nicht verbrauchte Brennstoff den Anodenräumen stromauf des Brennstoffzellenstapels 3 erneut zugeführt werden, so dass dabei die Anodenrezirkulationsleitung 8 wieder in die Anodenzufuhrleitung mündet.

Um die Flüssigkeit aus dem Anodenkreislauf 7 auszutragen, ist vorliegend in die Anodenrezirkulationsleitung 8 ein Abscheider 9 eingebunden. Dieser ist fluidmechanisch mit der Kathodenseite der Brennstoffzellenvorrichtung 1 verbunden, so dass die anodenseitig anfallende Flüssigkeit beispielsweise in die stromab des Brennstoffzellenstapels 3 vorhandene Kathodenabgasleitung 10 eingebracht wird, um die Flüssigkeit beispielsweise aus der Brennstoffzellenvorrichtung 1 auszuleiten. Alternativ oder ergänzend kann die anodenseitig anfallende Flüssigkeit vom Abscheider 9 auch in eine Kathodenzufuhrleitung 11 stromauf des Befeuchters 2 münden, so dass die Flüssigkeit dort in das frische Kathodengas eingetragen wird, bevor es in den Befeuchter 2 gelangt. Damit ist der Vorteil verbunden, dass der Befeuchter 2 insgesamt kleiner ausgelegt werden kann, da das frische, durch das Verdichten mittels des Verdichters 5 trockene Frischgas dann nicht mehr so stark zu befeuchten ist, um im Brennstoffzellenstapel 3 die erforderliche Feuchte der Membranen zu gewährleisten. Auf der Frischgasseite führt dies zu einer Befeuchtung, so das weniger Wasserübertragung durch die Membran erforderlich ist und daher die Membranfläche und infolge dessen die Baugröße des Befeuchters 2 reduziert werden kann.

Wie bereits ausgeführt, wird das im Brennstoffzellenstapel 3 anfallende und im Abscheider 9 gesammelte Flüssigwasser auch für den Befeuchter 2 genutzt, indem dessen Strömungskanäle 12 mit dem Abscheider 9 des Brennstoffzellenstapels 3 strömungsverbunden sind.

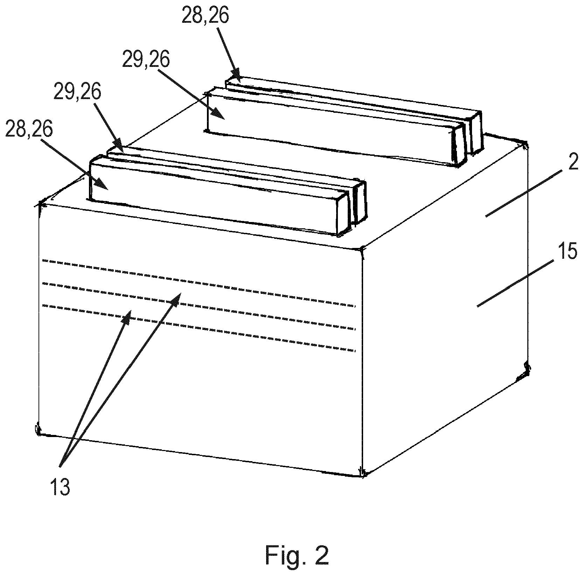

Der Befeuchter 2 ist in dem in Figur 2 gezeigten Ausführungsbeispiel als Planarbefeuchter mit mehreren Befeuchtermodulen 13 aufgebaut, von denen jedes mit einer wasserdampfpermeablen Membran 14 und einem auf einer Seite der Membran 14 angeordneten ersten Flussfeld 16 und einem auf der gegenüberliegenden Seite der Membran 14 angeordneten zweiten Flussfeld 17 gebildet ist, die in jeweils einer Flussfeldplatte 23, 24 ausgebildet sind. Die Flussfelder sind in einem wärmeisolierenden, also schlecht Wärme leitenden Rahmen 21 angeordnet. In den Flussfeldern 16, 17 sind Strömungskanäle 12 durch Flussfeldstege 22 getrennt, wobei die Flussfeldstege 22 als Hohlstege ausgeführt sein können zur Einbindung in einen Kühlmittelkreislauf 18, nämlich in den Kühlmittelkreislauf des Brennstoffzellenstapels 3 der Brennstoffzellenvorrichtung 1, der einen Kühler 19 und eine Kühlmittelpumpe 20 aufweist, die in dem in Figur 1 gezeigten Ausführungsbeispiel stromab des Befeuchters 2 in dem Kühlmittelkreislauf 18 angeordnet sind. Die mit dem Kühlmittel aus dem Brennstoffzellenstapel 3 abgeführte Wärme wird also genutzt, um das in den Strömungskanälen 14 strömende Gas zu erwärmen und der durch das Verdampfen des Flüssigwassers erfolgenden Abkühlung entgegen zu wirken. Auch ist mit dieser Wärmezufuhr eine höhere Flüssigwasserumsetzung verbunden. Diese Wärmenutzung vor dem Kühler 19 führt auch dazu, dass dieser weniger Wärme dem Kühlmittel entziehen muss und daher gegebenenfalls kleiner ausgeführt werden kann.

Es ist darauf hinzuweisen, dass gemäß Figur 2 das Befeuchtermodul 13 mehrfach vorgesehen ist und die Mehrzahl der Befeuchtermodule 13 durch ein generatives Fertigungsverfahren dichtungsfrei zu einem monolithischen Block 15 zusammengefasst sind, wobei das Befeuchtermodul 13 die eines der Flussfelder 16 aufweisende erste Flussfeldplatte 23 mit darin ausgebildeter Tasche aufweist, in die die Membran 14 eingelegt ist, die durch eine das andere Flussfeld 17 aufweisende zweite Flussfeldplatte abgedeckt ist.

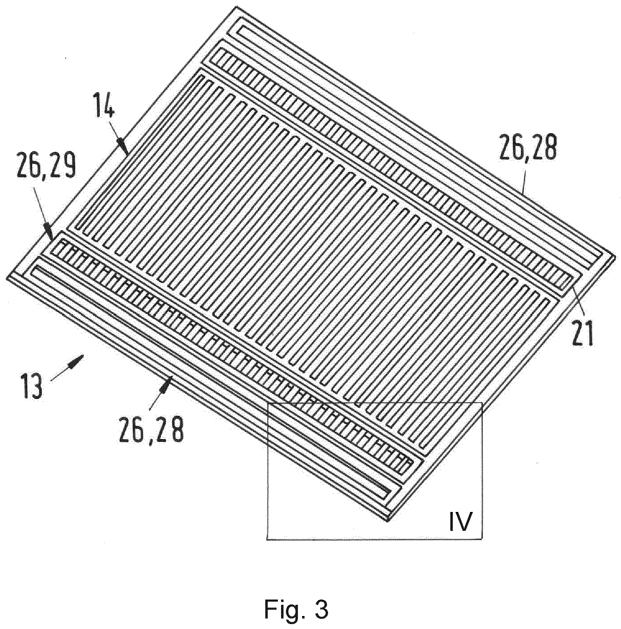

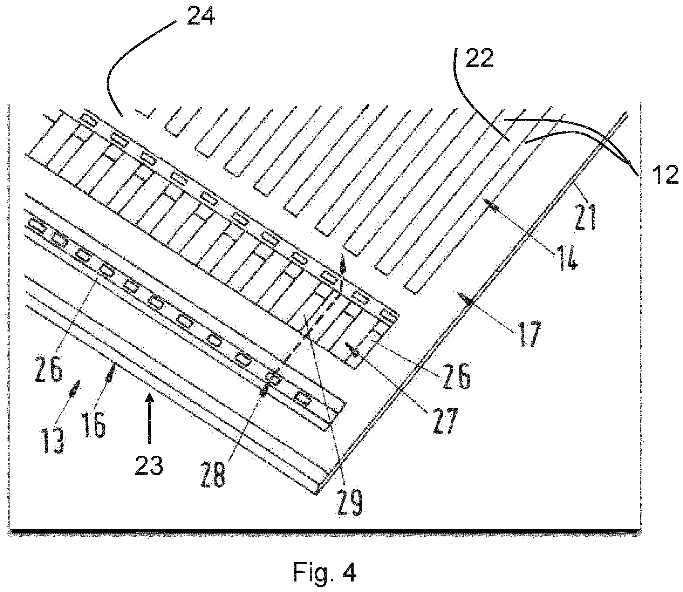

Die Figuren 3 und 4 verweisen darauf, dass Headerkanäle 26 zur Speisung und Entleerung der Flussfelder 16, 17 sich über die gesamte Flussfeldbreite erstrecken, wobei die Anschlüsse für die Headerkanäle 26 so gewählt sind, dass ein Gegenstrombetrieb erfolgt und der Headerkanal 26 für das eine Gas 28 von Tunnel 27 für das andere Gas 29 durchquert wird. Tunnel 27 als Teil der Strömungskanäle 12 werden auch für das andere Gas 29 genutzt, wobei die Tunnel 27 für das eine Gas 28 oder das andere Gas 29 in der Ebene der Flussfeldplatte 23, 24 um eine Breite der Flussfeldstege 22 versetzt zu den zugeordneten Strömungskanälen 12 angeordnet sind.

In dem Ausführungsbeispielen ist ein Gegenstrom für die Befeuchtermodule 13 gezeigt, während aber auch eine Gleich-, Kreuz- oder Kreuzgegenstromführung realisierbar ist.

In einem eine Brennstoffzellenvorrichtung 1 mit einem derartigen Befeuchter 2 aufweisenden Kraftfahrzeug besteht weniger Bauraumbedarf für den Befeuchter 2, der kompakter und entsprechend mit weniger Materialaufwand gefertigt werden kann.

### BEZUGSZEICHENLISTE

- 1: Brennstoffzellenvorrichtung
- 2: Befeuchter
- 3: Brennstoffzellenstapel
- 4: Brennstoffzelle
- 5: Verdichter
- 6: Brennstoffspeicher
- 7: Anodenkreislauf
- 8: Anodenrezirkulationsleitung
- 9: Abscheider
- 10: Kathodenabgasleitung
- 11: Kathodenzufuhrleitung
- 12: Strömungskanäle
- 13: Befeuchtermodul
- 14: Membran
- 15: monolithischer Block
- 16: erstes Flussfeld
- 17: zweites Flussfeld
- 18: Kühlmittelkreislauf
- 19: Kühler
- 20: Kühlmittelpumpe
- 21: Rahmen, Randbereich
- 22: Flussfeldstege
- 23: erste Flussfeldplatte
- 24: zweite Flussfeldplatte
- 26: Headerkanal
- 27: Tunnel
- 28: Frischgas
- 29: Abgas

## Patentansprüche

1. Befeuchter mit mindestens einem Befeuchtermodul (13), gebildet durch zwei Flussfeldplatten (23, 24) mit darin ausgebildeten Flussfeldern (16, 17), die jeweils durch Flussfeldstege (22) getrennte Strömungskanäle (12) aufweisen und durch mindestens eine Membran (14) getrennt sind, mit in den Flussfeldplatten (23, 24) ausgebildeten Headerkanälen (26) zur Speisung und Entleerung der Flussfelder (16, 17), wobei die Headerkanäle (26) sich über die gesamte Breite der Flussfelder (16, 17) erstrecken, und der Headerkanal (26) für das eine Gas (28) von Tunnel (27) als Teil der Strömungskanäle (12) des benachbarten Headerkanals (26) für das andere Gas (29), sowie der Headerkanal (26) für das andere Gas (29) von Tunnel (27) für das eine Gas (28) durchquert wird, sodass beide Gase (28, 29) jeweils auf der Frischgasseite oder der Abgasseite durch entsprechende Tunnel (27) geführt sind, wobei die Tunnel (27) für das eine Gas (28) oder das andere Gas (29) in der Ebene der Flussfeldplatte (23, 24) um eine Breite der Flussfeldstege (22) versetzt zu den zugeordneten Strömungskanälen (12) angeordnet sind.

2. Befeuchter nach Anspruch 1, **dadurch gekennzeichnet, dass** die Anschlüsse für die Headerkanäle (26) so gewählt sind, dass ein Gegenstrombetrieb erfolgt.

3. Befeuchter nach Ansprüche 1 oder 2, **dadurch gekennzeichnet, dass** das Befeuchtermodul (13) mehrfach vorgesehen ist und die Mehrzahl der Befeuchtermodule (13) durch ein generatives Fertigungsverfahren dichtungsfrei zu einem monolithischen Block (15) zusammengefasst ist.

4. Befeuchter nach einem der Ansprüche 1 bis 3, **dadurch gekennzeichnet, dass** das Befeuchtermodul (13) durch die eines der Flussfelder (16) aufweisende erste Flussfeldplatte (23) mit einer darin ausgebildeten Tasche gebildet ist, in die die Membran (14) eingelegt ist, die durch eine zweite Flussfeldplatte (24) abgedeckt ist.

5. Befeuchter nach einem der Ansprüche 1 bis 4, **dadurch gekennzeichnet, dass** das Befeuchtermodul (13) außenseitig einen Randbereich (21) aufweist, der aus einem wärmeisolierenden Material gebildet ist.

6. Brennstoffzellenvorrichtung (1) mit einem Befeuchter (2) nach den Ansprüchen 1 bis 5.

7. Kraftfahrzeug mit einer Brennstoffzellenvorrichtung (1) nach Anspruch 6.

## Claims

1. A humidifier with at least one humidifier module (13), formed by two flow field plates (23,24) with flow fields (16,17) formed therein, which each have flow channels (12) separated by flow field webs (22) and which are separated by at least one membrane (14), with header channels (26) formed in the flow field plates (23,24) for feeding and draining the flow fields (16,17), the header channels (26) extending over the entire width of the flow fields (16, 17) and the header channel (26) for the one gas (28) is traversed by tunnel (27) as part of the flow channels (12) of the adjacent header channel (26) for the other gas (29), and the header channel (26) for the other gas (29) is traversed by tunnel (27) for the one gas (28), so that both gases (28, 29) are each guided on the fresh gas side or on the exhaust gas side through corresponding tunnels (27), whereas the tunnels (27) for the one gas (28) or for the other gas (29) being arranged in the plane of the flow field plate (23, 24) offset by a width of the flow field webs (22) relative to the associated flow channels (12).

2. The humidifier according to claim 1, **characterized in that** the connections for the header channels (26) are selected in such a way that counter current operation takes place.

3. The humidifier according to claims 1 to 2, **characterized in that** the humidifier module (13) is provided several times and the plurality of humidifier modules (13) is combined into a monolithic block (15) without seals by a generative manufacturing process.

4. The humidifier according to any one of claims 1 to 3, **characterized in that** the humidifier module (13) is formed by the first flow field plate (23) having one of the flow fields (16) with a pocket formed therein, in which the membrane (14) is inserted, which is covered by a second flow field plate (24).

5. The humidifier according to one of claims 1 to 4, **characterized in that** the humidifier module (13) has an edge region (21) on the outside which is formed from a thermally insulating material.

6. A fuel cell device (1) with a humidifier (2) according to claims 1 to 5.

7. A motor vehicle with a fuel cell device (1) according to claim 6.

## Revendications

1. Humidificateur avec au moins un module d'humidificateur (13), formé par deux plaques de champ d'écoulement (23, 24) avec des champs d'écoulement (16, 17) formés en leur sein, qui présentent respectivement des canaux d'écoulement (12) séparés par des traverses de champ d'écoulement (22) et sont séparés par au moins une membrane (14), avec des canaux collecteurs (26) formés dans les plaques de champ d'écoulement (23, 24) pour alimenter et vider les champs d'écoulement (16, 17), dans lequel les canaux collecteurs (26) s'étendent sur toute la largeur des champs d'écoulement (16, 17), et le canal collecteur (26) pour l'un gaz (28) est traversé par un tunnel (27) en tant que partie des canaux d'écoulement (12) du canal collecteur (26) adjacent pour l'autre gaz (29), ainsi que le canal collecteur (26) pour l'autre gaz (29) est traversé par un tunnel (27) pour l'un gaz (28), de sorte que les deux gaz (28, 29) sont respectivement guidés à travers les tunnels correspondants (27) côté gaz frais ou côté gaz d'échappement, dans lequel les tunnels (27) pour l'un gaz (28) ou l'autre gaz (29) sont disposés dans le plan de la plaque de champ d'écoulement (23, 24) décalés d'une largeur des traverses de champ d'écoulement (22) par rapport aux canaux d'écoulement associés (12).

2. Humidificateur selon la revendication 1, **caractérisé en ce que** les raccords pour les canaux collecteurs (26) sont sélectionnés de sorte qu'un fonctionnement à contre-courant a lieu.

3. Humidificateur selon la revendication 1 ou 2, **caractérisé en ce que** le module d'humidificateur (13) est prévu plusieurs fois et la pluralité de modules d'humidificateur (13) est réunie sans joint en un bloc monolithique (15) par un procédé de fabrication générative.

4. Humidificateur selon l'une quelconque des revendications 1 à 3, **caractérisé en ce que** le module d'humidificateur (13) est formé par la première plaque de champ d'écoulement (23) présentant un des champs d'écoulement (16) avec une poche formée en son sein, dans laquelle la membrane (14) est insérée, qui est recouverte par une seconde plaque de champ d'écoulement (24).

5. Humidificateur selon l'une quelconque des revendications 1 à 4, **caractérisé en ce que** le module d'humidificateur (13) présente côté extérieur une zone de bord (21) qui est formée d'un matériau thermiquement isolant.

6. Dispositif à piles à combustible (1) avec un humidificateur (2) selon les revendications 1 à 5.

7. Véhicule automobile avec un dispositif à piles à combustible (1) selon la revendication 6.
